(19) Europäisches Patentamt
European Patent Office
Office européen des brevets

(11) Publication number: **0 050 248**
**B1**

(12) **EUROPEAN PATENT SPECIFICATION**

(45) Date of publication of patent specification: **06.05.87**

(51) Int. Cl.[4]: **C 08 L 43/04,** C 08 L 101/02, C 08 F 8/42, C 08 F 230/08

(21) Application number: **81107862.5**

(22) Date of filing: **02.10.81**

(54) **Vinyl-type resin composition.**

(30) Priority: **03.10.80 JP 139086/80**

(43) Date of publication of application: **28.04.82 Bulletin 82/17**

(45) Publication of the grant of the patent: **06.05.87 Bulletin 87/19**

(84) Designated Contracting States: **BE DE FR GB IT**

(56) References cited:
**EP-A-0 044 049**
**EP-A-0 048 461**
**GB-A-1 415 194**
**GB-A-1 461 531**
**GB-A-2 029 842**
**US-A-3 997 485**

(73) Proprietor: **KANEGAFUCHI KAGAKU KOGYO KABUSHIKI KAISHA**
**2-4 Nakanoshima 3-chome**
**Kita-ku Osaka-shi Osaka-fu (JP)**

(72) Inventor: **Kato, Yasushi**
**27-14, 1-chome, Katayama-cho Nagata-ku**
**Kobe-shi Hyogo-ken (JP)**
Inventor: **Furukawa, Hisao**
**Sanseiso, 96-1, Aza-Takigahira Shioya-cho**
**Tarumi-ku Kobe-shi Hyogo-ken (JP)**

(74) Representative: **Vossius & Partner**
**Siebertstrasse 4 P.O. Box 86 07 67**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 050 248 B1

**Description**

This invention relates to a composition comprising a vinyl-type resin containing silyl groups carrying a hydrolysable group at the end of the main chain or in side chains of the molecule, and a hardening catalyst. More specifically, this invention relates to a composition retaining an improved pot life while being exposed to the air.

It is known from JP—A—36395/1979 that a vinyl-type resin containing silyl groups at the end of the main chain or in side chains of the molecule not only brings out excellent properties in luster, weathering resistance, and discolouring resistance but also has a capacity of forming a finely crosslinked network structure in the presence of even a trace of moisture in the atmosphere, and becoming resistant to solvents, water, heat, scratching and weathering while enhancing the adhesion to inorganic matters due to the hydrolytic silyl radicals contained.

Although such a vinyl resin with groups carrying a silyl hydrolysable group hardens well with the aid of hardening catalysts, its pot life under exposure to air is too short, particularly when the silyl radicals carry three hydrolysable groups.

Therefore some patent applications with the aim of improving too short a pot life have been filed so far.

For example, according to US—A—4,043,953, the pot life is intended to be improved by adding 0.5 to 15% by weight of hydrolysable reactive silanes represented by the formula $X_nSi(OR)_{4-n}$ (X represents an organic radical having 1 to 12 carbon atoms; R represents methyl, ethyl, 2-methoxymethgyl, 2-ethoxyethyl, an alkyl radical having 5 or less carbon atoms; n is an integer from 0 to 2 inclusive) to organic silane polymers produced by subjecting a certain kind of monomer to copolymerization with an acrylate-alkoxysilane, methacrylatealkoxysilane, or vinylalkoxysilane, where the monomer does not contain active hydrogens like those in hydroxyl, carboxylic, or amido groups but the radical $CH_2=C<$.

US—A—4,043,953 proposes the use of 0.1 to 5% by weight, preferably 0.2 to 1% by weight of organic acids, such as p-toluenesulfonic acid and n-butylphosphoric acid; metal salts or organic acids, such as tin naphthenate, dibutyltin dilaurate, iron stearate, and lead octenate; organic amines, such as isoborondiamine, methylenediamine, and imidazol, as hardening catalysts in the copolymerization. However, no description is found in said patent concerning the pot life of the vinyl resin when exposed to air which is most important.

In effect, when measuring the pot life in many of the compositions according to US—A—4,043,953, it has become evident that only organic amines give a satisfying result in pot life. Nevertheless, when organic amines are used as a hardening agent of the vinyl-type polymer, the trouble is that they tend to stain the polymer; therefore, it was necessary to find other catalysts.

The use of organic carboxylic acids and their tin salts, respectively, such as dibutyl tin-dilaurate as curing catalysts, is known from US—A3,997,485, GB—A—2 029 842 and GB—A—1 415 194. These curing catalysts, however, do not provide a satisfactory pot life.

Earlier (not prepublished) EP—A—44 049 discloses a composition which comprises

(a) a vinyl-type resin composition having a main chain composed of a vinyl polymer having at least one silyl group bonded to a hydrolyzable group, the vinyl resin containing units derived from maleic anhydride and

(b) a curing promoter, such as a tin salt of a sulfide or mercaptide or an acid catalyst.

Earlier (not prepublished) EP—A—48 461 discloses a similar composition as EP—A—44 049 in which the polymer contains units derived from a carboxylic acid amide having a polymerizable group.

It is the object of the invention to provide further vinyl-type resin compositions showing improved pot life.

Therefore the subject matter of the invention is a vinyl-type resin composition comprising 0.01 to 10 parts by weight of a hardening catalyst and 100 parts by weight of a vinyl-type resin, the main chain of which substantially consists of a vinyl-type polymer which contains at least one silyl group carrying a hydrolyzable group at the end of the main chain or in side chains of each molecule, which is characterized in that the vinyl-type resin does not contain units derived from maleic anhydride nor from a carboxylic acid amide having a polymerizable group, and in that the hardening catalyst is

a) a mercaptide-type organic tin compound having an Sn—S bond,

b) a sulfide-type organic tin compound having an Sn=S bond, or

c) a mixture of a carboxylic acid-type organic tin compound with a) or b).

In this invention the vinyl-type resin contains at least one, preferably more than one, silyl group coupled with a hydrolysable group; the silyl groups can be defined by the general formula

$$\begin{array}{ccc} & (R_1)_{3-n} & R_2 \\ & | & | \\ X_n— & Si———— & CH—, \end{array}$$

where X represents a hydrolysable group; $R_1$ and $R_2$ represent hydrogen atoms or an alkyl, aryl, or aralkyl group having 1 to 10 carbon atoms; and n is an integer from 1 to 3 inclusive. The term "hydrolysable group" includes halogen, alkoxy, acyloxy, ketoxymate, amino, acid amide, aminoxy, mercapto, and alkenyloxy groups.

The vinyl-type resin of this invention which contains such silyl groups can be produced in various ways; however, the two processes: (A) hydrosilylation between a vinyl-type resin having carbon double bonds and a hydrosilane, and (B) copolymerization of a vinyl-type compound and a silyl compound which has double bonds capable of polymerization are industrially advantageous. In the following these two processes are described in detail:

(A) The vinyl-type resin of this invention which contains a silyl group can be easily produced by reacting a hydrosilane with a vinyl-type resin having carbon double bonds in the presence of a catalyst selected from transition elements of the VIIIth group. The hydrosilane used in this invention has the following general formula

$$\begin{array}{c} (R_1)_{3-n} \\ | \\ X_n\text{—Si—H.} \end{array}$$

In this formula, $R_1$ represents a monovalent alkyl, aryl or aralkyl group having 1 to 10 carbon atoms. X represents a hydrolysable group; and n is an integer from 1 to 3 inclusive. The hydrosilane can be illustrated concretely by halosilanes, such as methyldichlorosilane, trichlorosilane, and phenyldichlorosilane; alkoxysilanes, such as methyldioethoxysilane, methyldimethoxysilane, phenyldimethoxysilane, trimethoxysilane, and triethoxysilane; acyloxysilanes, such as methyldiacetoxysilane, phenyldiacetoxysilane, and triacetoxysilane; silanes, such as methyldiaminoxysilane, triaminoxysilane, methyldiaminosilane, triaminosilane, bis-(dimethylketoxymate) methylsilane, bis-(cyclohexylketoxymate) methylsilane, methyldiisopropenoxysilane, and triisopropenoxysilane.

The amount of these hydrosilanes to be used depends on the number of the carbon double bonds contained in the vinyl-type resin; however, it is preferred to be in the range of from 0.5 to 2 times the number of the carbon double bonds in molarity. As a matter of course it is possible to use a greater amount of silane whereby the excess of unreacted hydrosilane is to be collected.

In addition, the present invention makes it possible to employ cheap and reactive halosilanes as a starting material. The vinyl-type resin having silyl groups which is produced by using halosilanes hardens rapidly at room temperature when exposed to air while releasing hydrogen halides. Thus, this sort of vinyl-type resin has an intensive odour of hydrogen chloride, for instance, and tends to attack most things near or in contact with it. This fact confines it to a narrow use in effect. Accordingly, the halogen radicals in the vinyl-type resin should preferably be replaced by some other hydrolysable functional groups.

Preferably the halogen groups are substituted by alkoxy, acyloxy, acynoxy, amino, acid amide, ketoxymate, or mercapto groups according to the process disclosed for example in JP—A—91546/1979.

Except for vinyl-type compounds containing hydroxyl groups, the present invention is not particularly limited to a special kind of vinyl compound in preparing the vinyl-type resin to be used in the process A. In other words, it is acceptable for the vinyl-type resin to be mainly composed of units derived from the following compounds: acrylic or methacrylic esters, such as methylacrylate, methylmethacrylate, ethylacrylate, ethylmethacrylate, butylacrylate, butylmethacrylate, 2-ethylhexylacrylate, and 2-ethylhexylmethacrylate; carboxylic acids, such as acrylic acid, methacrylic acid, itaconic acid, and fumaric acid; acid anhydrides with the exception of maleic acid anhydride; epoxy compounds, such as glycidylacrylate, and glycidylmethacrylate; amino compounds, such as diethylaminoethylacrylate, diethylaminoethylmethacrylate, and aminoethylvinylether; acrylontrile; iminomethacrylate, styrene, alpha-methyl styrene, vinyl chloride, vinyl acetate, and vinyl propionate. Besides of units derived from maleic acid anhydride the vinyl type resin further does not contain units divided from a carboxylic acid amide having a polymerizable group.

When these vinyl compounds are used for preparing a homo- or copolymeric vinyl-type resin, it is also possible to introduce carbon double bonds into the end of the main chain or in side chains of the polymer by copolymerizing a certain amount of allylacrylate, allylmethacrylate, or diallylphthalate with the vinyl compounds. The amount of these compounds in need of doing this can be arbitrarily determined according to the number of silyl radicals to be put in the vinyl-type resin.

The molecular weight of the vinyl-type resin can be adjusted by adding such chain transfer agents as n-dodecylmercaptane, and t-dodecylmercaptane or by finding a proper amount of polymerization initiators, and suitable polymerization temperature.

In this invention, when the hydrosilanes are reacted with the carbon double bonds contained in the vinyl-type resin, the catalytic help of transition elements is needed. Among such transition elements of the VIIIth group are platinum, rhodium, cobalt, palladium and nickel; any of these elements can be effectively used for this purpose. The hydrosilylation is generally conducted at a temperature ranging from 50 to 150°C for approximately 1 to 10 hours.

(B) Another process for preparing the vinyl-type resin having silyl groups of this invention is the radical polymerization of silanes and vinyl compounds; the silanes are represented by the general formula

$$\begin{array}{c} (R_1)_{3-n} \\ | \\ R_3\text{—Si—}X_n, \end{array}$$

where $R_1$ represents a monovalent alkyl, aryl, or aralkyl group having 1 to 10 carbon atoms; $R_3$ represents an organic group having a double bond capable of polymerization; X represents a hydrolysable group; and n is an integer from 1 to 3 inclusive.

The silanes practically used are, for example:

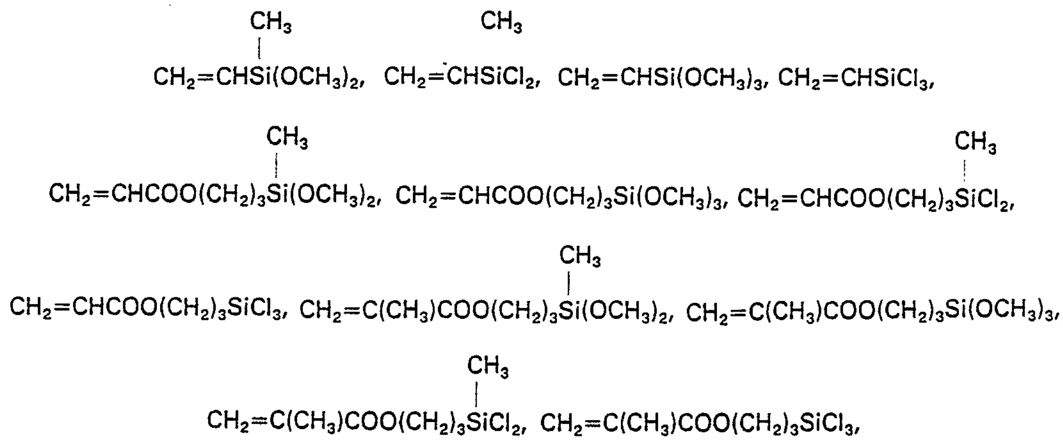

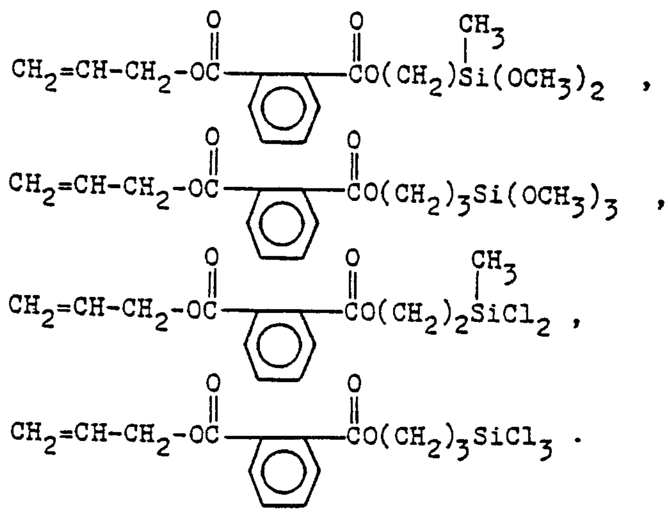

These silane compounds can be produced in various ways; for instance, they are produced by reacting acetylene, allylacrylate, allylmethacrylate, or diallylphthalate with methyldimethoxysilane, methyldichlorosilane, trimethoxysilane, or trichlorosilane in the presence of the catalytic action of transition elements of the VIIIth group.

The vinyl compounds usable in the process A can also be employed in this process, and yet further vinyl compounds containing a hydroxyl radical, such as 2-hydroxyethylacrylate, 2-hydroxyethylmethacrylate, 2-hydroxypropylacrylate, 2-hydroxypropylmethyacrylate, 2-hydroxyvinylether, and Aronix 5700® (a product of Toagosei Chemical Industry Co., Ltd.) are applicable.

The production of copolymers from these vinyl and silane compounds can be conducted according to an ordinary solution polymerization process. That is, the reaction is carried out by heating a mixture of the vinyl compound, silane compound, and radical initiator to a temperature of from 50 to 150°C. Chain transfer agents like n-dodecylmercaptane and t-dodecylmercaptane may be added to the reaction system in order to obtain the vinyl-type resin with specific molecular weight.

Solvents may or may not be used; if required, non-reactive solvents such as ethers, hydrocarbons and acetic esters are preferred. For the vinyl-type resin with silyl groups thus produced it is possible to exchange one hydrolysable group for another in accordance with a conventional process, which is shown, for exmaple, in JP—A—91546/1979.

In this way, the vinyl-type resin containing silyl groups, whose main chain is substantially built up of a vinyl-type polymer, which contains at least one silyl group carrying a hydrolysable group at the end of the main chain or in side chains of each molecule, can be obtained.

The following hardening catalysts may be employed in this invention.

(a) A mercaptide-type organic tin compound which has an Sn—S bond. These compounds have the following structures:

R Sn(S⁀COO), like
$(n\text{-}C_4H_9)_2Sn(SCH_2COO)$, and
$(n\text{-}C_8H_{17})_2Sn(SCH_2CH_2COO)$;
R Sn(S⁀S), like
$(n\text{-}C_8H_{17})_2Sn(SCH_2COOCH_2CH_2OCOCH_2S)$, and
$(n\text{-}C_8H_{17})_2Sn(SCH_2COOCH_2CH_2CH_2OCOCH_2S)$;
$R_2Sn(SCH_2COOR)_2$, like
$(n\text{-}C_4H_9)_2Sn(SCH_2COOC_8H_{17}\text{-}iso)_2$, and
$(n\text{-}C_4H_9)_2Sn(SCH_2COOC_{12}H_{25}\text{-}n)_2$;
$RSn(SCH_2COOR)_3$, like
$(n\text{-}C_4H_9)Sn(SCH_2COOC_8H_{17}\text{-}iso)_3$.

(b) A sulfide-type organic tin compound which has an Su=S bond. These compounds leave the following structure:

$R_2Sn{=}S$, like
$(n\text{-}C_8H_{17})_2Sn{=}S$.

(c) The compounds listed under (a) and (b) can also be used in the form of a mixture with a carboxylic acid-type organic tin compounds, for example:

$(n\text{-}C_4H_9)_2Sn(OCOC_{11}H_{23}\text{-}n)_2$,
$(n\text{-}C_4H_9)_2Sn(OCOCH{=}CHCOOCH_3)_2$,
$(n\text{-}C_8H_{17})_2Sn(OCOC_{11}H_{23}\text{-}n)_2$,
$(n\text{-}C_8H_{17})_2Sn(OCOCH{=}CHCOOC_4H_9\text{-}n)_2$, and
$Sn(OCOC_8H_{17}\text{-}n)_2$.

The mixing ratio of the carboxylic acid-type organic tin compound to the mercaptide or sulfide-type organic tin compound is in the range from 1:0.1 to 1:20, and preferably in the range from 1:0.1 to 1:10.

In general 0.01 to 10 parts by weight of the hardening catalyst are added to 100 parts by weight of the vinyl-type resin.

As stated above, the present invention provides a composition which retains an improved pot life when exposed to air. However, the pot life of the composition can be much more improved when trialkylorthoformates, such as trimethylorthoformate, and triethylorthoformate, hydrolytic esters, for example, hydrolytic organic silicon compounds such as methyltriethoxysilane, methyltriacetoxysilane, vinyltrimethoxysilane, tetramethylorthosilicate, tetraethylorthosilicate, N-beta-(aminoethyl)-gamma-aminopropyltrimethoxysilane, methyltrimethoxysilane, methyltriethoxysilane, dimethyldimethoxysilane, dimethyldiethoxysilane, vinyltrimethoxysilane, vinyltriethoxysilane, gamma-methacryloxypropyltrimethoxysilane, beta-(3,4-epoxycyclohexyl) ethyltrimethoxysilane, gamma-glycidoxypropyltrimethoxysilane, gamma-mercaptopropyltrimethoxysilane, and gamma-aminopropyltriethoxysilane, and/or alkyl alcohols, such as methyl alcohol, butyl alcohol, amyl alcohol, and cellosolves are mixed in to the composition.

Since the composition containing the vinyl-type resin with silyl groups hardens spontaneously at and below ambient temperature, it is useful for paintings and coatings. Once the composition has rapidly hardened at room temperature as shown in the examples it can actually give a painted surface a glossy coat. Likewise, the hardness of the coat can be enhanced by adding to the composition a certain compound like ethylsilicate or silane coupling agent if it is capable of copolymerizing with the vinyl-type resin with silyl groups.

In addition, because the composition has a good affinity with a variety of conventional paintings and coatings, it can be freely mixed into lacquers, acrylic coatings, acrylic melamine paints, and epoxy paints in an appropriate proportion, and contributes to improve the adhesion and weathering resistance of these paints and coatings.

On the other hand, many kinds of fillers and pigments like silica, calcium carbonate, magnesium carbonate, titanium oxide, iron oxide, fiberglass and others can be added to the composition.

Thereby the present composition becomes useful as coating and sealant for aircrafts, buildings, automobiles and glass wares, or as surface treating agent for many kinds of inorganic products.

This invention will be explained concretely by means of the following examples.

Example 1

To 70 g of xylene heated to 90°C were added dropwise 30 g of styrene, 22 g of gamma-methacryloxypropyltrimethoxysilane, 22 g of methylmethacrylate, 15 g of n-butylmethacrylate, and a

solution of 2 g of azobisisobutylonitrile dissolved in 18 g of butylacrylate, and the reaction was carried out for 10 hours.

As a result, a vinyl-type resin with silyl groups which had a molecular weight of 16,000 was obtained.

Example 2

Into 70 g of xylene heated to 90°C were poured dropwise 30 g of styrene, 22 g of gamma-methacryloxypropyltrimethoxysilane, 22 g of methylmethacrylate, 15 g of n-butylmethyacrylate, 18 g of butylacrylate, and a solution of 2 g of azobisisobutylonitrile dissolved in 2 g of n-dodecylmercaptane, and the reaction was made for 10 hours.

As a result, a vinyl-type resin with silyl groups which had a molecular weight of 9,000 was obtained.

Example 3

Into 70 g of xylene heated to 90°C were poured dropwise 30 g of styrene, 22 g of gamma-methacryloxypropyltrimethoxysilane, 22 g of methylmethacrylate, 15 g of n-butylmethacrylate, 18 g of butylacrylate, 4 g of 2-hydroxyethylmethacrylate, and a solution of 2 g of azobisisobutylonitrile dissolved in 4 g of dodelcylmercaptane, and the reaction was conducted for 10 hours.

As a result, a vinyl-type resin with silyl radicals which had a molecular weight of 6,000 was obtained.

Additives and hardening catalysts shown in Table 1 were put in each of the resin solutions prepared according to Examples 1 to 3. Next, these solution mixtures were diluted with xylene so that each of the viscosity of these mixtures could be set to a certain value of 15 seconds when measured by Ford cup test, as generally made in advance of painting.

After that, the pot life of these compositions was determined by measuring the time until a layer of skim appeared on top of the compositions or gelation occurred. These results are given in Table 1.

From these results, it will become clear that the pot life of any of the compositions prepared according to the present invention has been largely improved.

TABLE 1

| | Hardening Catalyst | pts./100 pts. of the resin | Additives | pts./100 pts. of the resin | Pot Life |
|---|---|---|---|---|---|
| Example 1 | Stann JF-9B | 3 | methanol | 10 | >10 hours |
| Example 2 | OT<br>Stann JF-9B | 0.6<br>2.4 | OSE | 10 | >10 hours |
| | OT | 1 | OSE | 10 | Skimming (3 hours later) |
| Example 3 (not according to claims) | DTL | 3 | methanol<br>OSE | 10<br>10 | Skimming (3 hours later) |
| | DTL<br>phthalic acid | 3<br>1 | methanol<br>OSE | 10<br>10 | >10 hours |

Stann JF-9B: a stabilizer for PVC produced by Sankyö Yüki KK (component: $(n\text{-}C_4H_9)_2Sn(SCH_2COOR)_2$, $R=C_4—C_{12}$).

OT: tin octylate; DTL: dibutyltin dilaurate; OSE: tetraethylorthosilicate.

**Claims**

1. A vinyl-type resin composition comprising 0.01 to 10 parts by weight of a hardening catalyst and 100 parts by weight of a vinyl-type resin, the main chain of which substantially consists of a vinyl-type polymer which contains at least one silyl group carrying a hydrolyzable group at the end of the main chain or in side chains of each molecule, characterized in that the vinyl-type resin does not contain units derived from maleic anhydride nor from a carboxylic acid amide having a polymerizable group, and in that the hardening catalyst is

a) a mercaptide-type organic tin compound having an Sn-S bond,

b) a sulfide-type organic tin compound having an Sn=S bond, or

c) a mixture of a carboxylic acid-type organic tin compound with a) or b).

2. A vinyl-type resin composition according to claim 1, characterized in that the mixing ratio of the carboxylic acid-type organic tin compound to the mercaptide-type organic tin compound is in the range of from 1:0.1 to 1:20.

3. A vinyl-type resin composition according to claim 1, characterized in that the mixing ratio of the carboxylic acid-type organic tin compound to the sulfide-type organic tin compound is in the range of from 1:0.1 to 1:20.

**Patentansprüche**

1. Harzmasse vom Vinyl-Typ, umfassend 0,01 bis 10 Gew.-Teile eines Härtungskatalysators und 100 Gew.-Teile eines Harzes vom Vinyl-Typ, dessen Hauptkette im wesentlichen aus einem Polymerisat vom Vinyl-Typ besteht, das mindestens eine eine Hydrolysierbare Gruppe tragende Silylgruppe am Ende der Hauptkette oder in den Seitenketten jedes Moleküls enthält, dadurch gekennzeichnet, daß das Harz vom Vinyl-Typ keine von Maleinsäureanhydrid noch von einem eine polymerisiebare Gruppe aufweisenden Carbonsäureamid abgeleitete Einheiten enthält, und daß der Härtungskatalysator

a) eine organische Zinnverbindung vom Mercaptid-Typ mit einer Sn-S-Bindung,

b) eine organische Zinnverbindung vom Sulfid-Typ mit einer Sn=S-Bindung oder

c) eine Gemisch aus einer organischen Zinnverbindung vom Carbonsäure-Typ mit a) oder b) darstellt.

2. Harzmasse vom Vinyl-Typ nach Anspruch 1, dadurch gekennzeichnet, daß das Mischungsverhältnis der organischen Zinnverbindung vom Carbonsäure-Typ zur organischen Zinnverbindung vom Mercaptid-Typ im Bereich von 1:0,1: bis 1:20 liegt.

3. Harzmasse vom Vinyl-Typ nach Anspruch 1, dadurch gekennzeichnet, daß das Mischverhältnis der organischen Zinnverbindung vom Carbonsäure-Typ zur organischen Zinnverbindung vom Sulfid-Typ im Bereich von 1:0,1: bis 1:20 liegt.

**Revendications**

1. Composition de résine du type vinylique comprenant 0,01 à 10 parties en poids de catalyseur de durcissement et 100 parties en poids de résine du type vinylique, dont la chaîne principale se compose essentiellement d'un polymère du type vinylique qui contient au moins un groupe silyle comportant un groupe hydrolysable à l'extrémité de la chaîne principale ou dans les chaînes latérales de chaque molécule, caractérisée en ce que la résine du type vinylique ne contient pas d'unités provenant d'anhydride maléique ni d'amide d'acide carboxylique comportant un groupe polymérisable et en ce que le catalyseur de durcissement est

a) un composé d'étain organique du type mercaptide comportant une liaison Sn-S,

b) un composé d'étain organique du type sulfure comportant une liaison Sn=S ou

c) un mélange d'un composé d'étain organique du type acide carboxylique avec a) ou b).

2. Composition de résine du type vinylique suivant la revendication 1, caractérisée en ce que le rapport de mélange du composé d'étain organique du type acide carboxylique au composé d'étain organique du type mercaptide est de l'ordre de 1/0,1 à 1/20.

3. Composition de résine du type vinylique suivant la revendication 1, caractérisée en ce que le rapport de mélange du composé d'étain organique du type acide carboxylique au composé d'étain organique du type sulfure est de l'ordre de 1/0,1 à 1/20.